# EUROPÄISCHE PATENTSCHRIFT

(11) **EP 4 077 957 B1**
(45) Veröffentlichungstag und Bekanntmachung des Hinweises auf die Patenterteilung: **13.09.2023**
(21) Anmeldenummer: 20838892.6
(22) Anmeldetag: 30.11.2020
(51) Int. Cl.: F16C 13/00, F16C 13/02, B21B 31/07, B21B 37/62, D21G 1/00, D21G 1/02

(54) **WALZENANORDNUNG**
ROLLERS ARRANGEMENT
AGENCEMENT DE ROULEAUX

(30) Priorität: 20.12.2019 DE 102019135524
(43) Veröffentlichungstag der Anmeldung: 26.10.2022
(73) Patentinhaber: Matthews International Corporation, Pittsburgh, Pennsylvania 15212 (US)
(72) Erfinder: HACKFORT, Thomas, 48683 Ahaus-Altstütte (DE); BOGENSTAHL, Frank, 48683 Ahaus (DE); LANSING, Christoph, 48691 Vreden (DE); WOLTERS, René, 48703 Stadtlohn (DE); BARTSCH, Harald, 46286 Dorsten (DE); KLEINGRIES, Carsten, 48691 Vreden (DE); WOLTERS, Kay, 48703 Stadtlohn (DE); GOTTSZKY, Jörg, 48691 Vreden (DE)
(74) Vertreter: Angerhausen, Christoph
(86) Internationale Anmeldenummer: PCT/DE2020/101009
(87) Internationale Veröffentlichungsnummer: WO 2021/121470

(56) Entgegenhaltungen:
- DE-B3-102011 018 874
- DE-U1-202014 104 438

## Beschreibung

Die Erfindung betrifft eine Walzenanordnung mit zumindest drei achsparallel angeordneten Walzen, wobei zwischen benachbarten Walzen jeweils ein Walzspalt gebildet ist, wobei jede der Walzen an jedem ihrer beiden axialen Enden einen Walzenzapfen aufweist und jede Walze über ihre beiden Walzenzapfen gelagert ist, wobei zumindest an einem ersten Walzenzapfen einer ersten der Walzen und einem benachbarten ersten Walzenzapfen einer zweiten der Walzen und an einem benachbarten ersten Walzenzapfen einer dritten der Walzen jeweils zumindest zwei Lager axial nebeneinander angeordnet sind.

In einem Walzenstuhl, wie zum Beispiel aus der DE 10 2011 018874 B3 bekannt, werden die Walzen über Lagerungen in den Einbaustücken zueinander in Position gesetzt. Durch Zustellung zumindest einer der Walzen kann der Abstand zwischen den Walzen eingestellt werden. Bei der Verarbeitung von herkömmlichen Materialien mit homogenen Materialeigenschaften werden die Walzen durch die mehr oder weniger konstante Kraftflussrichtung durch das Walzgut gegeneinander in die gegenüberliegende Laibung der Lagerungen gedrückt und verharren dort. Dies stellt solange kein Problem für die Verarbeitungsqualität dar, solange die Kraftrichtungen mehr oder weniger konstant sind und der Druck im Walzspalt beziehungsweise damit einhergehend die Zustellung einigermaßen gleich bleibt. Für einen Großteil von Walzprozessen ist diese Zustellung ausreichend genau, da es keine größeren Lastwechsel gibt.

Walzenstühle dieser herkömmlichen Art sind hingegen nicht dazu geeignet, wenn es um die Verarbeitung von Materialien geht, die im Zuge der kontinuierlichen Fertigung aufgrund des Walzvorgang und in dessen Verlauf unterschiedliche Materialeigenschaften ausbilden und dadurch unterschiedliche Prozesskräfte im Walzenspalt hervorrufen. Durch eine unterschiedliche Dichteverteilung in einer zu produzierenden Materialbahn kommt es zu unterschiedlichen Walzkraftaufkommen, welche die Walzenzustellung zusammenfallen lassen oder die Walzen auseinanderdrückt. Dies führt im Ergebnis zu unterschiedlichen Materialdicken und unterschiedlichen Eigenschaften des späteren fertigen Walzgutes als Materialbahn, Folie, beschichtete Materialbahn oder mehrlagige Materialbahn.

Insbesondere bei einer Walzenanordnung mit mehr als zwei Walzen in einer Linie und kontinuierlichem mäanderndem Hindurchführen des Walzguts durch die einzelnen Walzspalte nacheinander ergibt sich das Problem, jeweils wechselnd einmal die der Last zugewandte Seite der Lagerung spielfrei vorzuspannen und zum andern die dem Walzspalt abgewandte Laibungsseite in Kontakt zu bekommen, um die zum Walzen nötige Last in beiden Walzspalten auf beiden Seiten der Walze aufbringen zu können.

Es ist daher die Aufgabe der vorliegenden Erfindung, eine Walzenanordnung derart zu verbessern, dass diese eine verbesserte Zustellung ermöglicht und gleichzeitig ein geringes Lagerspiel realisiert ist.

Diese Aufgabe wird durch die vorgeschlagene Walzenanordnung nach Anspruch 1 gelöst. Vorteilhafte Ausführungsformen der Erfindung sind jeweils Gegenstand der abhängigen Ansprüche.

Demgemäß wird eine Walzenanordnung mit zumindest drei achsparallel angeordneten Walzen vorgeschlagen, wobei zwischen benachbarten Walzen jeweils ein Walzspalt gebildet ist, wobei jede der Walzen an jedem ihrer beiden axialen Enden einen Walzenzapfen aufweist und jede Walze über ihre beiden Walzenzapfen gelagert ist, wobei zumindest an einem ersten Walzenzapfen einer ersten der Walzen und einem benachbarten ersten Walzenzapfen einer zweiten der Walzen und zumindest an einem ersten Walzenzapfen einer dritten der Walzen jeweils zumindest zwei Lager axial nebeneinander angeordnet sind, wobei zwischen einem inneren Lager am ersten Walzenzapfen der ersten Walze und einem äußeren Lager am ersten Walzenzapfen der zweiten Walze eine Druckspannung erzeugt ist und zwischen einem äußeren Lager am ersten Walzenzapfen der ersten Walze und einem inneren Lager am ersten Walzenzapfen der zweiten Walze eine Zugspannung erzeugt ist, oder umgekehrt, wobei zwischen dem inneren Lager am ersten Walzenzapfen der zweiten Walze und einem äußeren Lager am ersten Walzenzapfen der dritten Walze eine Druckspannung erzeugt ist und zwischen dem äußeren Lager am ersten Walzenzapfen der zweiten Walze und einem inneren Lager am ersten Walzenzapfen der dritten Walze eine Zugspannung erzeugt ist oder umgekehrt. Umgekehrt meint dabei, dass die Zug- und/der die Druckspannung auch vertauscht sein können, solange diese zwischen diagonal beabstandeten benachbarten Lagern bestehen. Durch diese kreuzweise Verspannung können zwei Walzenlagerungen in Reihe auf den Walzenzapfen derart gegeneinander verspannt werden, dass sich eine Schachtelung der Kraftführung ergibt, so, dass eine nötige Spielfreistellung ermöglicht wird.

Die Spannungszustände zwischen diagonal beabstandeten Lagern können dabei insbesondere von Walze zu Walze alternieren. Das heißt, dass das innere Lager der mittleren Walze zur ersten Walze hin unter einer Zugspannung stehen kann und zur dritten Walze hin unter einer Druckspannung oder umgekehrt. Weiterhin heißt dies, dass das äußere Lager der mittleren Walze zur ersten Walze hin unter einer Druckspannung stehen kann und zur dritten Walze hin unter einer Zugspannung oder umgekehrt. Insbesondere können die beidseitigen an einem Lager angreifenden Spannungen gleich groß sein. Es kann daher vorgesehen sein, dass eine beliebige Anzahl weiterer Walzen mit derselben Lagerkonfiguration achsparallel nebeneinander angeordnet ist und die Spannungsverläufe durch die Lager sich entsprechend der obigen Beschreibung fortsetzen.

Außerdem können zumindest an einem zweiten Walzenzapfen der ersten Walze und an einem benachbarten zweiten Walzenzapfen der zweiten Walze und an einem benachbarten dritten Walzenzapfen der dritten Walze jeweils zumindest zwei Lager angeordnet sein, wobei spiegelbildlich zur gegenüberliegenden ersten Walzenzapfenseite zwischen einem inneren Lager am zweiten Walzenzapfen der ersten Walze und einem äußeren Lager am zweiten Walzenzapfen der zweiten Walze eine Druckspannung erzeugt ist und zwischen einem äußeren Lager am zweiten Walzenzapfen der ersten Walze und einem inneren Lager am zweiten Walzenzapfen der zweiten Walze eine Zugspannung erzeugt ist oder umgekehrt, wobei spiegelbildlich zur gegenüberliegenden ersten Walzenzapfenseite zwischen einem inneren Lager am zweiten Walzenzapfen der zweiten Walze und einem äußeren Lager am zweiten Walzenzapfen der dritten Walze eine Druckspannung erzeugt ist und zwischen einem äußeren Lager am zweiten Walzenzapfen der zweiten Walze und einem inneren Lager am zweiten Walzenzapfen der dritten Walze eine Zugspannung erzeugt ist oder umgekehrt. Spiegelbildlich bedeutet dabei gespiegelt an einer radialen senkrecht zu den Walzen verlaufende Mittelachse. Somit können insbesondere sowohl an beiden innenliegenden als auch an beiden außenliegenden Lagern gegenüberliegender Walzenzapfen gleichgerichtete Zug- oder Druckspannungen anliegen.

Insbesondere kann vorgesehen sein, dass zumindest an einem ersten Walzenzapfen der ersten Walze und dem benachbarten ersten Walzenzapfen der zweiten Walze und dem benachbarten ersten Walzenzapfen der dritten Walze jeweils zumindest drei Lager axial nebeneinander angeordnet sind, wobei zwischen einerseits einem inneren Lager und einem äußeren Lager am ersten Walzenzapfen der ersten Walze und andererseits einer mittleren Lagereinheit am ersten Walzenzapfen der zweiten Walze eine Druckspannung erzeugt ist, und zwischen einerseits einer mittleren Lagereinheit am ersten Walzenzapfen der ersten Walze und andererseits einem inneren Lager und einem äußeren Lager am ersten Walzenzapfen der zweiten Walze eine Zugspannung erzeugt ist oder umgekehrt, wobei zwischen einerseits einem inneren Lager und einem äußeren Lager am ersten Walzenzapfen der zweiten Walze und andererseits einer mittleren Lagereinheit am ersten Walzenzapfen der dritten Walze eine Druckspannung erzeugt ist, und zwischen einerseits einer mittleren Lagereinheit am ersten Walzenzapfen der zweiten Walze und andererseits einem inneren Lager und einem äußeren Lager am ersten Walzenzapfen der dritten Walze eine Zugspannung erzeugt ist oder umgekehrt. Diese Anordnung wird insbesondere bei hohen Lasten relevant, bei denen es notwendig ist, die Lager in einer Mehrfachanordnung so zu schachteln, dass sich die Lasten in den Zapfen mit den Belastungskollektiven so überlagern, dass sich die Zapfenbiegung bzw. das Biegemoment zum Walzenballenübergang, also am walzenseitigen Ende des zum Walzenballen gerichteten Wälzlagers auf Null Nm reduziert.

Die Spannungszustände zwischen diagonal beabstandeten Lagern können dabei insbesondere von Walze zu Walze alternieren. Das heißt, dass das innere Lager der mittleren Walze zum inneren und äußeren Lager der ersten Walze hin unter einer Zugspannung stehen kann und zum inneren und äußeren Lager zur dritten Walze hin unter einer Druckspannung oder umgekehrt. Weiterhin heißt dies, dass das innere und äußere Lager der mittleren Walze zu mittleren Lager der ersten Walze hin unter einer Druckspannung stehen kann und zum mittleren Lager der dritten Walze hin unter einer Zugspannung oder umgekehrt. Insbesondere können die beidseitigen an einem Lager angreifenden Spannungen gleich groß sein. Es kann daher vorgesehen sein, dass eine beliebige Anzahl weiterer Walzen mit derselben Lagerkonfiguration achsparallel nebeneinander angeordnet ist und die Spannungsverläufe durch die Lager sich entsprechend der obigen Beschreibung fortsetzen.

Außerdem können zumindest am zweiten Walzenzapfen der ersten Walze und am benachbarten zweiten Walzenzapfen der zweiten Walze und am benachbarten zweiten Walzenzapfen der dritten Walze jeweils zumindest drei Lager angeordnet sein, wobei spiegelbildlich zur gegenüberliegenden ersten Walzenzapfenseite zwischen einerseits einem inneren Lager und einem äußeren Lager am zweiten Walzenzapfen der ersten Walze und andererseits einer mittleren Lagereinheit am zweiten Walzenzapfen der zweiten Walze eine Druckspannung erzeugt ist, und zwischen einerseits einer mittleren Lagereinheit am zweiten Walzenzapfen der ersten Walze und andererseits einem inneren Lager und einem äußeren Lager am zweiten Walzenzapfen der zweiten Walze eine Zugspannung erzeugt ist oder umgekehrt, wobei spiegelbildlich zur gegenüberliegenden ersten Walzenzapfenseite zwischen einerseits einem inneren Lager und einem äußeren Lager am zweiten Walzenzapfen der zweiten Walze und andererseits einer mittleren Lagereinheit am zweiten Walzenzapfen der dritten Walze eine Druckspannung erzeugt ist, und zwischen einerseits einer mittleren Lagereinheit am zweiten Walzenzapfen der zweiten Walze und andererseits einem inneren Lager und einem äußeren Lager am zweiten Walzenzapfen der dritten Walze eine Zugspannung erzeugt ist oder umgekehrt. Spiegelbildlich bedeutet dabei gespiegelt an einer radialen senkrecht zu den Walzen verlaufende Mittelachse. Somit kann insbesondere einerseits an beiden innenliegenden und beiden außenliegenden Lagern gegenüberliegender Walzenzapfen dieselbe Spannungsart als auch andererseits an beiden mittleren Lagern gegenüberliegender Walzenzapfen dieselbe Spannungsart vorgesehen sein. Dabei kann weiterhin vorgesehen sein, dass die einzelnen Spannungszustände unmittelbar benachbarter aufeinander zuweisender Lagerseiten jeweils komplementär zueinander sind.

Durch eine derartige Lageranordnung und Lagerverspannung wird zwischen gegenüberliegenden Walzenzapfen jeweils kreuzweise ein Druck- beziehungsweise ein Zugszustand erzeugt, wobei die Druckverläufe gleichartiger Drücke benachbarter Verspannungen jeweils denselben Verlauf aufweisen. Beispielsweise laufen Druckspannungen von Walzenzapfen zu Walzenzapfen stets vom äußeren und vom inneren Lager nach innen laufend zur mittleren Lagereinheit und demgegenüber Zugspannungen stets von der mittleren Lagereinheit nach außen laufend zum äußeren und inneren Lager.

Es kann vorgesehen sein, dass ein zu walzendes Material von Walzspalt zu Walzspalt abwechselnd in jeweils entgegengesetzter Richtung durch diese hindurchgeführt ist. Dadurch können innenliegende Walzen beidseitig zum Walzen genutzt werden. Durch unterschiedliche Drehrichtung benachbarter Walzen ist es notwendig, dass Material abwechselnd von oben und von unten durch benachbarte Walzspalte zu führen.

Ferner kann zum Erzeugen der Zug- und/oder Druckspannungen zwischen den Walzenzapfen jeweils eine Walzenlageregelungseinheit angeordnet sein, über welche die jeweiligen Walzspaltzustellungen realisiert sind.

Dabei kann die Walzenlageregelungseinheit einen druckgeregelten Aktuator aufweisen. Vorzugsweise ist zwischen jedem gekoppelten Lagerpaar ein separater Aktuator vorgesehen. Ein druckgeregelter Aktuator hat insbesondere bei Materialien mit inhomogener Dichteverteilung den Vorteil, dass besonders wirksam die Zustellung eingestellt werden kann.

Insbesondere kann der Aktuator ein hydraulisches, mechanisches oder elektrisches Stellglied aufweisen. Alternativ kann der Aktuator ein hydraulisches Stellglied, eine mechanische Spindel und einen Linearmotor aufweisen.

Ferner kann die Walzenlageregelungseinheit jeweils mit den Lageraußenringen der Lager in einer Wirkverbindung stehen.

Insbesondere kann die mittlere Lagereinheit ein oder mehrere, vorzugsweise zwei Lager aufweisen. Wenn die mittlere Lagereinheit zwei Lager aufweist, können diese in Axialrichtung unmittelbar nebeneinander angeordnet sein. Ferner können nebeneinanderliegende Lager der mittleren Lagereinheit axial miteinander verspannt sein.

Außerdem kann das Lager ein Wälz- und/oder ein Gleitlager umfassen.

Beispielhafte Ausführungsformen der Erfindung werden anhand der nachfolgenden Figuren erläutert. Dabei zeigt:
- Figur 1a: eine Querschnittsdarstellung einer Walzenanordnung unter Darstellung von Prozesskräften im Walzprozess;
- Figur 1b: eine schematische Ansicht einer aus dem Stand der Technik bekannten Walzenanordnung unter Darstellung von auf die Lager wirkenden Prozesskräften im Walzprozess;
- Figur 2: eine schematische Ansicht eines Ausführungsbeispiels einer erfindungsgemäßen Walzenanordnung;
- Figur 3: eine schematische Ansicht eines weiteren Ausführungsbeispiels einer erfinderischen Walzenanordnung;
- Figur 4: eine Querschnittsansicht einer beispielhaften Walzenanordnung mit einer Mehrzahl in Reihe angeordneter Walzen;
- Figur 5a: eine Seitenansicht eines Ausführungsbeispiels einer erfindungsgemäßen Walzenanordnung mit vier Lagern je Walzenzapfen;
- Figur 5b: eine halbtransparente Seitenansicht eines Ausführungsbeispiels einer erfindungsgemäßen Walzenanordnung mit vier Lagern je Walzenzapfen;
- Figur 6: eine Ansicht eines Kraftecks eines Ausführungsbeispiels einer erfindungsgemäßen Walzenanordnung mit vier Lagern je Walzenzapfen.

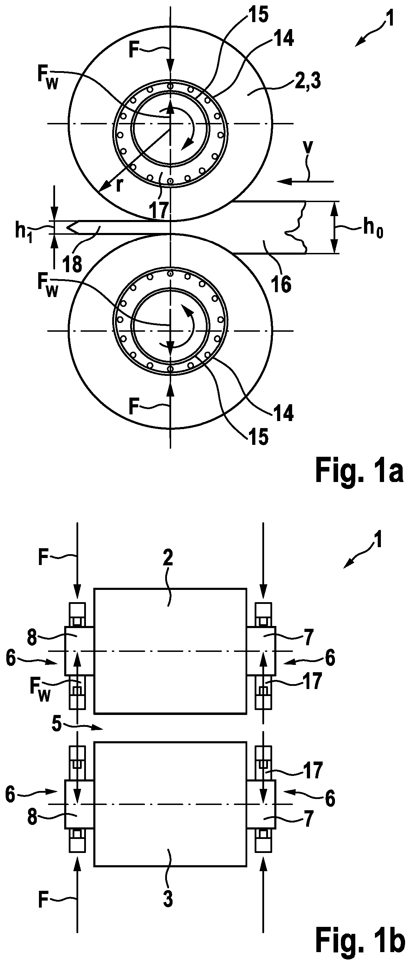

In einem Walzenstuhl werden die Walzen über Lagerungen in den Einbaustücken zueinander in Position gesetzt. Figur 1a zeigt eine Walzenanordnung 1 eines Walzenstuhls mit zwei achsparallel zueinander angeordneten Walzen 2, 3, zwischen denen ein Walzspalt der Breite h₁ ausgebildet ist. In der gezeigten Seitenansicht ist zu erkennen, dass die Walzenlagerung jeweils aus einem Lagerinnenring 15 und einem Lageraußenring 14 besteht, in welchem der Lagerinnenring 15 drehbar gelagert ist. Die Lageraußenringe 14 sind in den Einbaustücken verankert. Durch das Hindurchführen der Materialbahn 16 mit einer Dicke hₒ durch den Walzspalt 5 wird die Materialbahn 16 zu einer verdichteten Materialbahn 18 mit einer Materialdicke einer Höhe h₁ verringert. Durch die mehr oder weniger konstante Kraftflussrichtung durch die Materialbahn 16 des Walzguts werden die Walzen gegeneinander in die gegenüberliegende Laibung der Lagerungen gedrückt und verharren dort. Als resultierende Prozesskräfte wird dabei senkrecht zur Durchführungsrichtung des Materials 16 dabei jeweils die Kraft aus dem Walzgut Fw vom Lagerinnenring 15 auf den Lageraußenring 14 ausgeübt. Gleichzeitig wirkt jeweils die Zustellkraft F von den Lageraußenringen 14 auf die Lagerinnenringe 15. Infolgedessen werden die Lagerinnenringe 15 zur innerhalb der Lageraußenringe 14 nach außen gedrückt, sodass jeweils auf der dem Walzspalt 5 zugewandten Seite des Lageraußenrings 14 ein Lagerspiel 17 entsteht.

Eine Darstellung der Prozesskräfte gemäß Figur 1a ist ebenso in Figur 1b zu sehen, die eine Draufsicht auf die Lageranordnung aus Figur 1a zeigt. Zwei Walzen 2, 3 sind unter Ausbildung eines Walzspalts 5 achsparallel zueinander angeordnet. Jede Walze 2, 3 weist an ihren axialen Enden 6 jeweils Walzenzapfen 7, 8 auf, wobei an jedem Walzenzapfen 7, 8 jeweils ein Lager 9 angeordnet ist, sodass die Walze 2 ,3 durch diese Lageranordnung gelagert ist. Bei der Durchführung einer Materialbahn 16 durch den Walzspalt 5 entstehen senkrecht zur Durchführungsrichtung Prozesskräfte, die über die Walzenballen zu den Walzenzapfen geleitet werden und von den Zapfen jeweils auf die darauf angeordneten Lagerinnenringe 15 übertragen werden, welche sich wiederum über die Lageraußenringe 14 abstützen. Durch diese Kräfte F_{W} aus dem Walzgut werden die Lagerinnenringe 15 innerhalb der Lageraußenringe 14 nach außen gedrückt, sodass in jedem Lager innenseitig ein Lagerspiel 17 entsteht. Zusätzlich wird durch die Zustellung der Lager zueinander, d. h. durch Einstellung der Breite des Walzspalts 5, die Kraft F aus der Zustellung in Richtung des Walzspalts 5 auf die Lageraußenringe 14 ausgeübt.

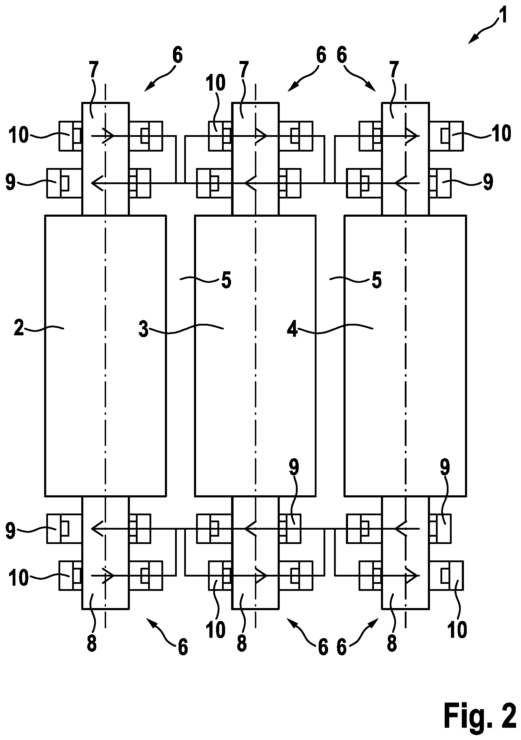

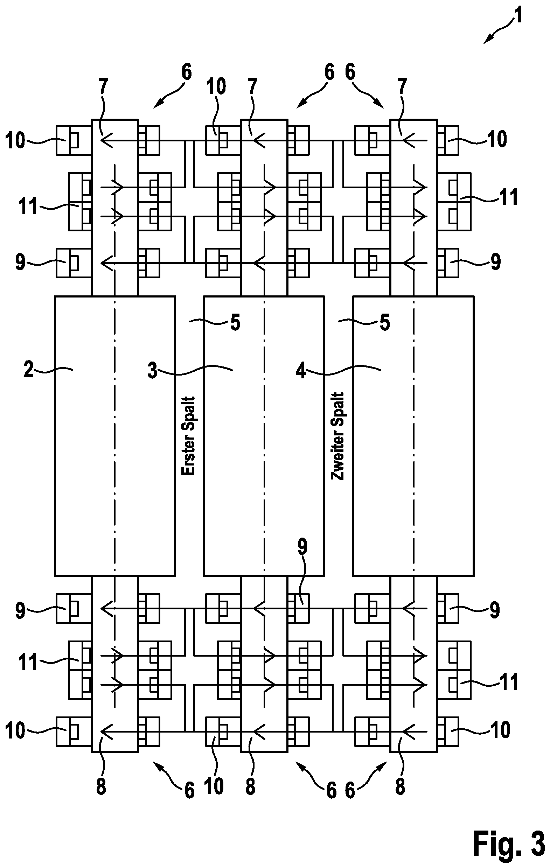

Die in den Figuren 2 und 3 gezeigten erfindungsgemäßen Ausführungsbeispiele haben insbesondere bei großen durch das Walzgut hervorgerufenen Lastwechseln den Vorteil, durch die vorgesehene Walzenlageregelung von Walzenspalt 5 zu Walzenspalt 5 unabhängig mikrometergenau auf die Lastwechsel zu reagieren und gleichzeitig die Lagerspiele zu eliminieren. Mit der in der Erfindung beschriebenen Anordnung 1 der Walzenlagerung zueinander wird es möglich, die Einbaustücke mit der Kraftbeaufschlagung sowie den dazu entgegenzurichtenden Spaltzustellungen in einer Schachtelung anzuordnen, welche jeweils in einer Kaskade angeordnet sind. In einer ersten Ausführung gemäß Figur 2 können bei einer Reihe achsparallel angeordneter Walzen 2, 3, 4 jeweils zwei Walzenlagerungen je Walzenzapfen 7, 8 vorgesehen sein und derart gegeneinander verspannt werden, dass sich einer Schachtelung der Kraftführung ergibt, sodass die nötige Spielfreistellung ermöglicht wird. Im dargestellten Beispiel stehen jeweils die Lager Außenringe 14 diagonal benachbarter Lager in einer Wirkverbindung, die entweder eine Zug-oder Druckspannung zwischen den Lagern erzeugt. Beispielsweise steht der Lageraußenring 15 des äußeren Lagers 10 am ersten Walzenzapfen 7 der ersten Walze 2 mit dem diagonal benachbarten Lageraußenring 15 des inneren Lagers 9 am ersten Walzenzapfen 7 der zweiten Walze 3 unter einer Zugspannung. Weiterhin besteht zwischen der von der ersten Walze 2 abgewandten Seite des Lageraußenrings 15 des Lagers 9 am ersten Walzenzapfen 7 der zweiten Walze 3 und dem diagonal benachbarten Lageraußenring 15 des äußeren Lagers 10 auf dem ersten Walzenzapfen 7 der dritten Walze 4 eine Druckspannung. Gleichzeitig besteht eine Wirkverbindung zwischen dem Lageraußenring 15 des inneren Lagers 9 am ersten Walzenzapfen 7 der ersten Walze 2 und dem Lageraußenring 15 des äußeren Lagers 10 am ersten Walzenzapfen 7 der zweiten Walze 3 in Form einer Druckspannung. Die der ersten Walze 2 abgewandte Seite des Lageraußenrings 15 des äußeren Lagers 10 am ersten Walzenzapfen 7 der zweiten Walze 3 steht wiederum in einer Wirkverbindung mit dem diagonal benachbarten Lageraußenring 15 des inneren Lagers 9 am ersten Walzenzapfen 7 der dritten Walze 4 in Form einer Zugspannung. Somit wechseln sich die Zug- oder Druckspannungen im Verlauf der Reihe der in Wirkverbindung miteinander stehenden Lager immer zickzackförmig miteinander ab. Somit verlaufen im in Figur 2 dargestellten Ausführungsbeispiel die Zugspannungen auf der Seite der ersten Walzenzapfen 7 immer jeweils vom äußeren Lager 10 der linken Walze zum inneren Lager 9 der rechts daneben angeordneten Walze. Umgekehrt verlaufen die Druckspannungen auf der Seite der ersten Walzenzapfen 7 immer jeweils vom inneren Lager 9 der linken Walze zum äußeren Lager 10 der rechts daneben angeordneten Walze. Die Spannungsverläufe auf der Seite der zweiten Walzenzapfen 8 ist genau spiegelbildlich zu denen auf der ersten Seite der Walzenzapfen 7. Im dargestellten Ausführungsbeispiel in Figur 2 verlaufen die Druckspannungen dabei immer jeweils vom inneren Lager 9 der linken Walze zum äußeren Lager 10 der rechts daneben angeordneten Walze. Umgekehrt verlaufen die Zugspannungen immer jeweils vom linken Lager 10 der linken Walze zum inneren Lager 9 der rechts daneben angeordneten Walze. Diese Lageranordnungsform mit den entsprechenden Spannungsverläufen kann sich über eine beliebig große Anzahl achsparallel zueinander angeordneter Walzen mit dazwischen ausgebildeten Walzspalten 5 fortsetzen.

Das Ausführungsbeispiel in Figur 3 zeigt ein weiteres Ausführungsbeispiel einer Walzenanordnung 1, bei der an einem ersten Walzenzapfen 7 der ersten Walze 2 und dem benachbarten ersten Walzenzapfen 7 der zweiten Walze 3 jeweils vier Lager 9, 10, 11 axial nebeneinander angeordnet sind. Dabei bilden die mittleren beiden Lager 11 eine Lagereinheit, bei der beide Lager 11 unmittelbar nebeneinander angeordnet sind und gegeneinander verspannt sind. Demgegenüber sind die beiden äußeren Lager 9 und 10 jeweils beabstandet zur mittleren Lagereinheit angeordnet. Dabei ist zwischen einerseits dem inneren Lager 9 und dem äußeren Lager 10 am ersten Walzenzapfen 7 der ersten Walze 2 und andererseits der mittleren Lagereinheit am ersten Walzenzapfen 7 der zweiten Walze 3 eine Druckspannung erzeugt. Ferner ist zwischen einerseits der mittleren Lagereinheit am ersten Walzenzapfen 7 der ersten Walze 2 und andererseits dem inneren Lager 9 und dem äußeren Lager 10 am ersten Walzenzapfen 7 der zweiten Walze 3 eine Zugspannung erzeugt. Diese Anordnung 1 wird insbesondere bei hohen Lasten relevant, bei denen es notwendig ist, die Lager 9, 10, 11 in einer Mehrfachanordnung so zu schachteln, dass sich die Lasten in den Zapfen 7, 8 mit den Belastungskollektiven so überlagern, dass sich die Zapfenbiegung bzw. das Biegemoment zum Walzenballenübergang, also am walzenseitigen Ende des zum Walzenballen gerichteten Wälzlagers auf Null Nm reduziert. Figur 3 zeigt ferner eine Walzenanordnung 1 aus drei achsparallel angeordnete Walzen 2, 3, 4, wobei am ersten Walzenzapfen 7 der dritten Walze 4 ebenfalls vier Lager 9, 10, 11 axial nebeneinander angeordnet sind, wobei zwischen einerseits dem inneren Lager 9 und dem äußeren Lager 10 am ersten Walzenzapfen 7 der zweiten Walze 3 und andererseits der mittleren Lagereinheit am ersten Walzenzapfen 7 der dritten Walze 4 eine Druckspannung erzeugt ist, und zwischen einerseits der mittleren Lagereinheit am ersten Walzenzapfen 7 der zweiten Walze 3 und andererseits dem inneren Lager 9 und dem äußeren Lager 10 am ersten Walzenzapfen 7 der dritten Walze 4 eine Zugspannung erzeugt ist. Darüber hinaus sind am zweiten Walzenzapfen 8 der ersten Walze 2 und am benachbarten zweiten Walzenzapfen 8 der zweiten Walze 3 jeweils vier Lager 9, 10, 11 angeordnet, wobei spiegelbildlich zur gegenüberliegenden ersten Walzenzapfenseite 7 zwischen einerseits dem inneren Lager 9 und dem äußeren Lager 10 am zweiten Walzenzapfen 8 der ersten Walze 2 und andererseits der mittleren Lagereinheit am zweiten Walzenzapfen 8 der zweiten Walze 3 eine Druckspannung erzeugt, und zwischen einerseits der mittleren Lagereinheit am zweiten Walzenzapfen 8 der ersten Walze 2 und andererseits dem inneren Lager 9 und dem äußeren Lager 10 am zweiten Walzenzapfen 8 der zweiten Walze 3 eine Zugspannung erzeugt ist. Außerdem sind am zweiten Walzenzapfen 8 der dritten Walze 4 ebenfalls vier Lager angeordnet, wobei spiegelbildlich zur gegenüberliegenden ersten Walzenzapfenseite 7 zwischen dem inneren Lager 9 und dem äußeren Lager 10 am zweiten Walzenzapfen 8 der zweiten Walze 3 und andererseits einer mittleren Lagereinheit am zweiten Walzenzapfen 8 der dritten Walze 4 eine Druckspannung erzeugt ist, und zwischen einerseits der mittleren Lagereinheit 11 am zweiten Walzenzapfen 8 der zweiten Walze 3 und andererseits dem inneren Lager 9 und dem äußeren Lager 10 am zweiten Walzenzapfen 8 der dritten Walze 4 eine Zugspannung erzeugt ist.

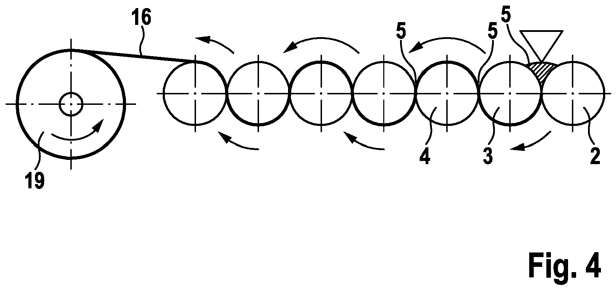

Figur 4 zeigt eine Walzenanordnung 1 mit sieben Walzen in einer Linie, bei denen die innenliegenden fünf Walzen jeweils vorderseitig und rückseitig Walzspalte 5 mit den jeweils benachbarten Walzen ausbilden. Die fertig gewalzte Materialbahn 16 wird nach Durchlaufen aller Walzspalte 5 auf eine Aufwicklungsrolle 19 aufgewickelt. Durch die Anforderung bei derartigen Walzanordnungen 1, in beiden Walzspalten 5 der betroffenen Walzen die erforderliche Zustellung bereitzustellen, ist die Erfindung gerade für derartige Walzenanordnungen 1 mit mehr als zwei Walzen von besonderem Vorteil. Bei derartigen Anordnungen 1 ergibt sich nämlich das Problem, jeweils wechselnd einmal die der Last zugewandten Seite der Lagerung spielfrei vorzuspannen und gleichzeitig die dem Walzenspalt 5 abgewandte Laibungsseite in Kontakt zu bekommen, um die zum Walzen nötig Last im Walzspalt aufbringen zu können.

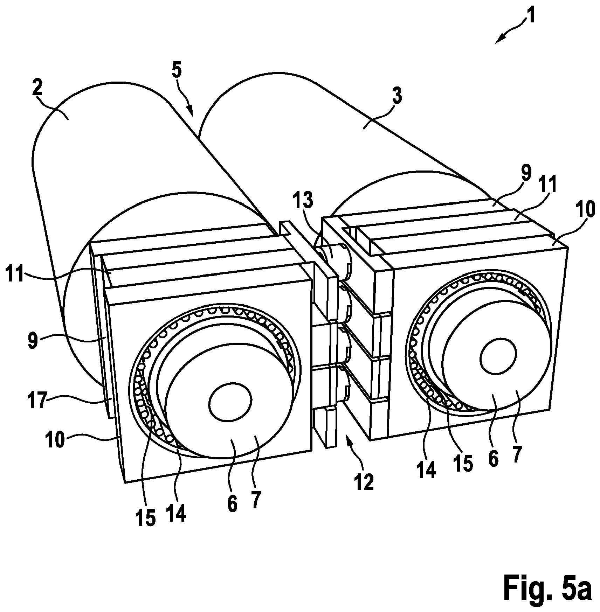

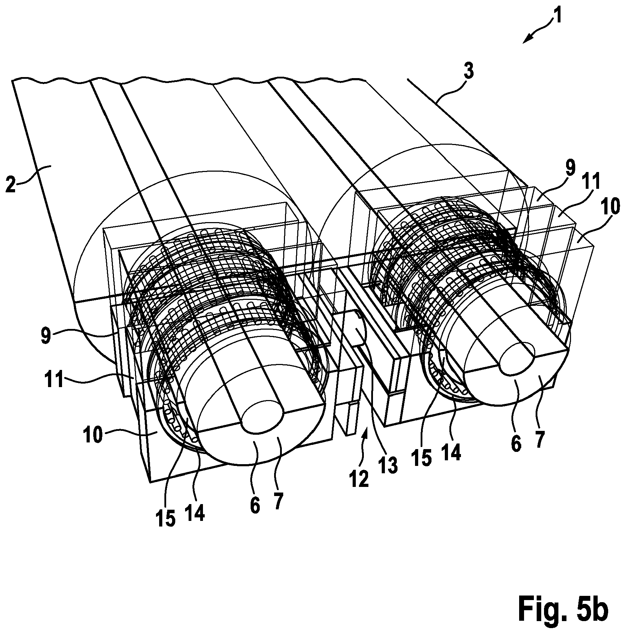

Die Figuren 5a und 5b zeigen jeweils Seitenansichten eines Ausführungsbeispiels einer erfindungsgemäßen Walzenanordnung 1 mit vier Lagern 9, 10, 11 je Walzenzapfen 7, 8. Dabei wird insbesondere sichtbar, wie die einzelnen Lager 9, 10, 11 gegeneinander verspannt sind. Jede der dargestellten Walzen 2, 3 weist dabei vier Lager 9, 10, 11 auf dem dargestellten Walzenzapfen 7 auf, welche mittels einer zwischen den Walzenzapfen 7 beider Walzen 7, 8 angeordneten Walzenlageregelungseinheit 12 unter definierten Vorspannungen zueinander eingestellt werden. Die Lager sind dabei auf beiden Zapfen 7 jeweils vertikal in Axialrichtung der Walzen 2, 3 nebeneinander geschachtelt. Es ist zu sehen, dass die Walzenlageregelungseinheit 12 vier Aktuatoren 13 aufweist, welche übereinander angeordnet sind. Dabei erzeugen im dargestellten Beispiel der oberste und der unterste Aktuator 13 eine Zugspannung, die auf die mittleren Lager 11 der linken Walze 2 und das innere und das äußere Lager der rechten Walze 3 wirkt. Demgegenüber üben die mittleren beiden Aktuatoren 13 jeweils eine Druckspannung auf das innere und das äußere Lager 9, 10 der linken Walze 2 und auf die mittleren Lager 11 der rechten Walze 3 aus. Die Spannungen werden dabei über Druckübertragungselemente übertragen, welche beidseitig des Aktuators mit den entsprechenden Lageraußenringen 14 der angesteuerten Lager gekoppelt sind. Die Druckübertragungselemente sind dabei waagerecht untereinander angeordnet und bilden eine Schubladenstruktur aus. Es ist zu erkennen, dass der Lagerinnenring 15 des frontseitigen unter einer Druckspannung stehenden äußeren Lagers 10 der linken Walze 2 zum Walzspalt 5 hin an den Wälzelementen des Lageraußenrings 14 anliegt und auf der vom Walzspalt 5 abgewandten Seite ein Lagerspiel vorliegt. Gleichermaßen ist zu erkennen, dass der Lagerinnenring 15 des frontseitigen unter einer Zugspannung stehenden äußeren Lagers 10 der rechten Walze 3 auf der vom Walzspalt 5 abgewandten Seite an den Wälzelementen des Lageraußenrings 14 anliegt und auf der dem Walzspalt 5 zugewandten Seite ein Lagerspiel vorliegt. Über die Walzenlageregelungseinheit ist es möglich, die einzelnen Zug- und Druckkräfte der einzelnen Aktuatoren zu variieren und insbesondere über den in den verschiedenen Walzspalten 5 vorherrschenden Drücken zu regeln. Es ist ferner möglich, die Druckkonfiguration zu vertauschen, so dass die unter Zugspannung stehenden Lager in eine Druckspannung überführt und die unter einer Druckspannung in einen Zugspannungszustand überführt werden. Im dargestellten Ausführungsbeispiel sind die Lager Zylinderrollenlager.

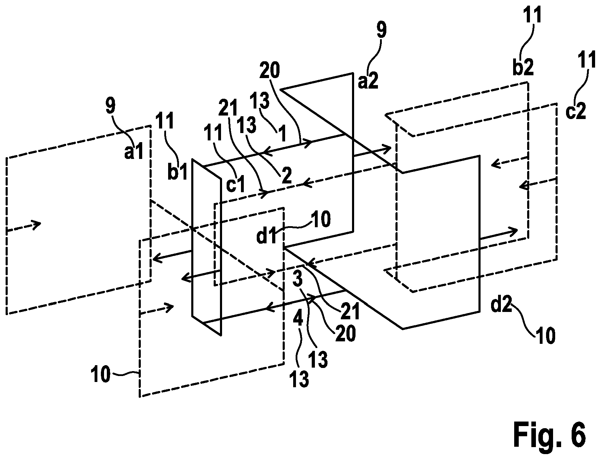

Figur 6 zeigt eine Kraftflussdarstellung von Walzenzapfen zu Walzenzapfen am Beispiel einer Vierfachlagerung. In dieser beispielhaften Ausführung wird durch den gestrichelt hervorgehobenen Rahmen die Zustellung der zwei benachbarten Walzen 2, 3 zueinander realisiert. Die in der Darstellung mit a1, d1, b2 und c2 gekennzeichneten Lager werden mit zwei mit den Zahlen 2 und 3 gekennzeichneten Aktuatoren druckgeregelt zugestellt. Gleichzeitig besteht über die mit b1, c1 sowie a2 und d2 gekennzeichneten Lager eine weggeregelte Positionshaltung über die mit 1 und 4 gekennzeichneten Stellglieder. Damit werden die jeweiligen Lager gegeneinander und zueinander vorgespannt und die jeweiligen Walzen zueinander vorpositioniert. In gleicher Weise kann die Konstruktion an den Positionen in einer Reihe adaptiert werden, so dass die Walzen fortlaufend zueinander jeweils den nächsten Walzenspalt darstellen können.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung wesentlich sein, wie in den Ansprüchen definiert.

### Bezugszeichenliste:

- 1: Walzenanordnung
- 2: Erste Walze
- 3: Zweite Walze
- 4: Dritte Walze
- 5: Walzspalt
- 6: Axiales Ende
- 7: Erster Walzenzapfen
- 8: Zweiter Walzenzapfen
- 9: Inneres Lager
- 10: Äußeres Lager
- 11: Mittleres Lager
- 12: Walzenlageregelungseinheit
- 13: Aktuator
- 14: Lageraußenring
- 15: Lagerinnenring
- 16: Materialbahn
- 17: Lagerspiel
- 18: Verdichtete Materialbahn
- 19: Aufwicklungsrolle
- 20: Druckspannung
- 21: Zugspannung
- F: Kraft aus Zustellung
- Fw: Kraft aus Walzgut
- h1: Materialbahn
- h0: verdichtete Materialbahn
- v: Walzgeschwindigkeit

## Patentansprüche

1. Walzenanordnung (1) mit zumindest drei achsparallel angeordneten Walzen (2, 3), wobei zwischen benachbarten Walzen jeweils ein Walzspalt (5) gebildet ist, wobei jede der Walzen (2, 3) an jedem ihrer beiden axialen Enden (6) einen Walzenzapfen (7, 8) aufweist und jede Walze (2, 3) über ihre beiden Walzenzapfen (7, 8) gelagert ist, wobei zumindest an einem ersten Walzenzapfen (7) einer ersten der Walzen (2) und einem benachbarten ersten Walzenzapfen (7) einer zweiten der Walzen (3) und an einem benachbarten ersten Walzenzapfen (7) einer dritten der Walzen (4) jeweils zumindest zwei Lager (9, 10) axial nebeneinander angeordnet sind,
wobei zwischen einem inneren Lager (9) am ersten Walzenzapfen (7) der ersten Walze (2) und einem äußeren Lager (10) am ersten Walzenzapfen (7) der zweiten Walze (3) eine Druckspannung erzeugt ist und zwischen einem äußeren Lager (10) am ersten Walzenzapfen (7) der ersten Walze (2) und einem inneren Lager (9) am ersten Walzenzapfen (7) der zweiten Walze (3) eine Zugspannung erzeugt ist oder umgekehrt,
wobei zwischen dem inneren Lager (9) am ersten Walzenzapfen (7) der zweiten Walze (3) und einem äußeren Lager (10) am ersten Walzenzapfen (7) der dritten Walze (4) eine Druckspannung erzeugt ist und zwischen dem äußeren Lager (10) am ersten Walzenzapfen (7) der zweiten Walze (3) und einem inneren Lager (9) am ersten Walzenzapfen (7) der dritten Walze (4) eine Zugspannung erzeugt ist oder umgekehrt.

2. Walzenanordnung (1) nach Anspruch 1, wobei zumindest an einem zweiten Walzenzapfen (8) der ersten Walze (2) und an einem benachbarten zweiten Walzenzapfen (8) der zweiten Walze (3) und an einem benachbarten dritten Walzenzapfen (8) der dritten Walze (4) jeweils zumindest zwei Lager (9, 10) angeordnet sind,
wobei spiegelbildlich zur gegenüberliegenden ersten Walzenzapfenseite (7) zwischen einem inneren Lager (9) am zweiten Walzenzapfen (8) der ersten Walze (2) und einem äußeren Lager (10) am zweiten Walzenzapfen (8) der zweiten Walze (3) eine Druckspannung erzeugt ist und zwischen einem äußeren Lager (10) am zweiten Walzenzapfen (8) der ersten Walze (2) und einem inneren Lager (9) am zweiten Walzenzapfen (8) der zweiten Walze (3) eine Zugspannung erzeugt ist oder umgekehrt,
und wobei spiegelbildlich zur gegenüberliegenden ersten Walzenzapfenseite (7) zwischen einem inneren Lager (9) am zweiten Walzenzapfen (8) der zweiten Walze (3) und einem äußeren Lager (10) am zweiten Walzenzapfen (8) der dritten Walze (4) eine Druckspannung erzeugt ist und zwischen einem äußeren Lager (10) am zweiten Walzenzapfen (8) der zweiten Walze (3) und einem inneren Lager (9) am zweiten Walzenzapfen (8) der dritten Walze (4) eine Zugspannung erzeugt ist oder umgekehrt.

3. Walzenanordnung (1) nach einem der vorangehenden Ansprüche, wobei zumindest an einem ersten Walzenzapfen (7) der ersten Walze (2), dem benachbarten ersten Walzenzapfen (8) der zweiten Walze (3) und dem benachbarten ersten Walzenzapfen (7) der dritten Walze (4)jeweils zumindest drei Lager (9, 10, 11) axial nebeneinander angeordnet sind,
wobei zwischen einerseits einem inneren Lager (9) und einem äußeren Lager (10) am ersten Walzenzapfen (7) der ersten Walze (2) und andererseits einer mittleren Lagereinheit (11) am ersten Walzenzapfen (7) der zweiten Walze (3) eine Druckspannung erzeugt ist, und zwischen einerseits einer mittleren Lagereinheit (11) am ersten Walzenzapfen (7) der ersten Walze (2) und andererseits einem inneren Lager (9) und einem äußeren Lager (10) am ersten Walzenzapfen (7) der zweiten Walze (3) eine Zugspannung erzeugt ist oder umgekehrt,
wobei zwischen einerseits einem inneren Lager (9) und einem äußeren Lager (10) am ersten Walzenzapfen (7) der zweiten Walze (3) und andererseits einer mittleren Lagereinheit (11) am ersten Walzenzapfen (7) der dritten Walze (4) eine Druckspannung erzeugt ist, und zwischen einerseits einer mittleren Lagereinheit (11) am ersten Walzenzapfen (7) der zweiten Walze (3) und andererseits einem inneren Lager (9) und einem äußeren Lager (10) am ersten Walzenzapfen (7) der dritten Walze (4) eine Zugspannung erzeugt ist oder umgekehrt.

4. Walzenanordnung (1) nach Anspruch 3, wobei zumindest am zweiten Walzenzapfen (8) der ersten Walze (2), am benachbarten zweiten Walzenzapfen (8) der zweiten Walze (3) und am benachbarten zweiten Walzenzapfen (8) der dritten Walze (4) jeweils zumindest drei Lager (9, 10, 11) angeordnet sind, wobei spiegelbildlich zur gegenüberliegenden ersten Walzenzapfenseite (7) zwischen einerseits einem inneren Lager (9) und einem äußeren Lager (10) am zweiten Walzenzapfen (8) der ersten Walze (2) und andererseits einer mittleren Lagereinheit (11) am zweiten Walzenzapfen (8) der zweiten Walze (3) eine Druckspannung erzeugt ist, und zwischen einerseits einer mittleren Lagereinheit (11) am zweiten Walzenzapfen (8) der ersten Walze (2) und andererseits einem inneren Lager (9) und einem äußeren Lager (10) am zweiten Walzenzapfen (8) der zweiten Walze (3) eine Zugspannung erzeugt ist oder umgekehrt,
und wobei spiegelbildlich zur gegenüberliegenden ersten Walzenzapfenseite (7) zwischen einerseits einem inneren Lager (9) und einem äußeren Lager (10) am zweiten Walzenzapfen (8) der zweiten Walze (3) und andererseits einer mittleren Lagereinheit (11) am zweiten Walzenzapfen (8) der dritten Walze (4) eine Druckspannung erzeugt ist, und zwischen einerseits einer mittleren Lagereinheit (11) am zweiten Walzenzapfen (8) der zweiten Walze (3) und andererseits einem inneren Lager (9) und einem äußeren Lager (10) am zweiten Walzenzapfen (8) der dritten Walze (4) eine Zugspannung erzeugt ist oder umgekehrt.

5. Walzenanordnung (1) nach einem der vorangehenden Ansprüche, wobei ein zu walzendes Material von Walzspalt (5) zu Walzspalt (5) abwechselnd in jeweils entgegengesetzter Richtung durch diese hindurchgeführt ist.

6. Walzenanordnung (1) nach einem der vorangehenden Ansprüche, wobei zum Erzeugen der Zug- und/oder Druckspannungen zwischen den Walzenzapfen (7, 8) jeweils eine Walzenlageregelungseinheit (12) angeordnet ist, über welche die jeweiligen Walzspaltzustellungen realisiert sind.

7. Walzenanordnung (1) nach Anspruch 6, wobei die Walzenlageregelungseinheit (12) einen druckgeregelten Aktuator (13) aufweist.

8. Walzenanordnung (1) nach Anspruch 6 oder 7, wobei der Aktuator ein hydraulisches, mechanisches oder elektrisches Stellglied aufweist.

9. Walzenanordnung (1) nach einem der Ansprüche 6 bis 8, wobei die Walzenlageregelungseinheit (12) jeweils mit den Lageraußenringen (14) der Lager (9, 10, 11) in einer Wirkverbindung steht.

10. Walzenanordnung (1) nach einem der Ansprüche 3 bis 9, wobei die mittlere Lagereinheit (11) ein oder mehrere Lager aufweist.

11. Walzenanordnung (1) nach einem der vorangehenden Ansprüche, wobei das Lager (9, 10, 11) ein Wälz- und/oder ein Gleitlager aufweist.

## Claims

1. A roll arrangement (1) having at least three rolls (2, 3) arranged axially parallel, wherein a nip (5) is formed in each case between adjacent rolls,
wherein each of the rolls (2, 3) has a roll journal (7, 8) at each of its two axial ends (6) and each roll (2, 3) is mounted via its two roll journals (7, 8), wherein at least two bearings (9, 10) are arranged axially next to one another in each case at least at a first roll journal (7) of a first of the rolls (2) and an adjacent first roll journal (7) of a second of the rolls (3) and at an adjacent first roll journal (7) of a third of the rolls (4),
wherein a compressive stress is generated between an inner bearing (9) at the first roll journal (7) of the first roll (2) and an outer bearing (10) at the first roll journal (7) of the second roll (3) and a tensile stress is generated between an outer bearing (10) at the first roll journal (7) of the first roll (2) and an inner bearing (9) at the first roll journal (7) of the second roll (3) or vice versa, wherein a compressive stress is generated between the inner bearing (9) at the first roll journal (7) of the second roll (3) and an outer bearing (10) at the first roll journal (7) of the third roll (4) and a tensile stress is generated between the outer bearing (10) at the first roll journal (7) of the second roll (3) and an inner bearing (9) at the first roll journal (7) of the third roll (4) or vice versa.

2. The roll arrangement (1) according to claim 1, wherein at least two bearings (9, 10) are arranged in each case at least at a second roll journal (8) of the first roll (2) and at an adjacent second roll journal (8) of the second roll (3) and at an adjacent third roll journal (8) of the third roll (4),
wherein a compressive stress is generated mirror-symmetrically to the opposite first roll journal side (7) between an inner bearing (9) at the second roll journal (8) of the first roll (2) and an outer bearing (10) at the second roll journal (8) of the second roll (3) and a tensile stress is generated between an outer bearing (10) at the second roll journal (8) of the first roll (2) and an inner bearing (9) at the second roll journal (8) of the second roll (3) or vice versa,
and wherein a compressive stress is generated mirror-symmetrically to the opposite first roll journal side (7) between an inner bearing (9) at the second roll journal (8) of the second roll (3) and an outer bearing (10) at the second roll journal (8) of the third roll (4) and a tensile stress is generated between an outer bearing (10) at the second roll journal (8) of the second roll (3) and an inner bearing (9) at the second roll journal (8) of the third roll (4) or vice versa.

3. The roll arrangement (1) according to one of the preceding claims, wherein at least three bearings (9, 10, 11) are arranged axially next to one another in each case at least at a first roll journal (7) of the first roll (2), the adjacent first roll journal (8) of the second roll (3) and the adjacent first roll journal (7) of the third roll (4),
wherein a compressive stress is generated between an inner bearing (9) and an outer bearing (10) at the first roll journal (7) of the first roll (2) on the one hand and a central bearing unit (11) at the first roll journal (7) of the second roll (3) on the other hand, and a tensile stress is generated between a central bearing unit (11) at the first roll journal (7) of the first roll (2) on the one hand and an inner bearing (9) and an outer bearing (10) at the first roll journal (7) of the second roll (3) on the other hand or vice versa,
wherein a compressive stress is generated between an inner bearing (9) and an outer bearing (10) at the first roll journal (7) of the second roll (3) on the one hand and a central bearing unit (11) at the first roll journal (7) of the third roll (4) on the other hand, and a tensile stress is generated between a central bearing unit (11) at the first roll journal (7) of the second roll (3) on the one hand and an inner bearing (9) and an outer bearing (10) at the first roll journal (7) of the third roll (4) on the other hand or vice versa.

4. The roll arrangement (1) according to claim 3, wherein at least three bearings (9, 10, 11) are arranged in each case at least at the second roll journal (8) of the first roll (2), at the adjacent second roll journal (8) of the second roll (3) and at the adjacent second roll journal (8) of the third roll (4),
wherein a compressive stress is generated mirror-symmetrically to the opposite first roll journal side (7) between an inner bearing (9) and an outer bearing (10) at the second roll journal (8) of the first roll (2) on the one hand and a central bearing unit (11) at the second roll journal (8) of the second roll (3) on the other hand, and a tensile stress is generated between a central bearing unit (11) at the second roll journal (8) of the first roll (2) on the one hand and an inner bearing (9) and an outer bearing (10) at the second roll journal (8) of the second roll (3) on the other hand or vice versa,
and wherein a compressive stress is generated mirror-symmetrically to the opposite first roll journal side (7) between an inner bearing (9) and an outer bearing (10) at the second roll journal (8) of the second roll (3) on the one hand and a central bearing unit (11) at the second roll journal (8) of the third roll (4) on the other hand, and a tensile stress is generated between a central bearing unit (11) at the second roll journal (8) of the second roll (3) on the one hand and an inner bearing (9) and an outer bearing (10) at the second roll journal (8) of the third roll (4) on the other hand or vice versa.

5. The roll arrangement (1) according to one of the preceding claims, wherein a material to be rolled is guided through the nip (5) to the nip (5) alternately in the respectively opposite direction.

6. The roll arrangement (1) according to one of the preceding claims, wherein a roll position regulation unit (12) is arranged in each case between the roll journals (7, 8) in order to generate the tensile and/or compressive stresses, via which roll position regulation unit the respective nip feed positions are implemented.

7. The roll arrangement (1) according to claim 6, wherein the roll position regulation unit (12) has a pressure-regulated actuator (13).

8. The roll arrangement (1) according to claim 6 or 7, wherein the actuator has a hydraulic, mechanical or electrical actuating element.

9. The roll arrangement (1) according to one of claims 6 to 8, wherein the roll position regulation unit (12) is operatively connected in each case to the bearing outer rings (14) of the bearings (9, 10, 11).

10. The roll arrangement (1) according to one of claims 3 to 9, wherein the central bearing unit (11) has one or more bearings.

11. The roll arrangement (1) according to one of the preceding claims, wherein the bearing (9, 10, 11) has a rolling bearing and/or a plain bearing.

## Revendications

1. Disposition de rouleaux (1) avec au moins trois rouleaux (2, 3) disposés de manière parallèle axialement, dans laquelle, entre des rouleaux adjacents, est formé un interstice de rouleau (5), dans lequel chacun des rouleaux (2, 3) comprend, à chacune de ces deux extrémités axiales (6), un axe de rouleau (7, 8) et chaque rouleau (2, 3) est logé par l'intermédiaire de ses deux axes de rouleau (7, 8), dans lequel, au moins au niveau d'un premier axe de rouleau (7) d'un premier des rouleaux (2) et d'un premier axe de rouleau (7) adjacent d'un deuxième des rouleaux (3) et au niveau d'un premier axe de rouleau (7) adjacent d'un troisième des rouleaux (4), sont disposés respectivement au moins deux paliers (9, 10), de manière juxtaposée axialement,
dans lequel, entre un palier interne (9) sur le premier axe de rouleau (7) du premier rouleau (2) et un palier externe (10) sur le premier axe de rouleau (7) du deuxième rouleau (3), est générée une contrainte de pression et, entre un palier externe (10) sur le premier axe de rouleau (7) du rouleau (2) et un palier interne (9) sur le premier axe de rouleau (7) du premier rouleau (2) et un palier interne (9) sur le premier axe de rouleau (7) du deuxième rouleau (3), est générée une contrainte de traction ou inversement,
dans lequel, entre le palier interne (9) sur le premier axe de rouleau (7) du deuxième rouleau (3) et un palier externe (10) sur le premier axe de rouleau (7) du troisième rouleau (4), est générée une contrainte de pression et, entre le palier externe (10) sur le premier axe de rouleau (7) du deuxième rouleau (3) et un palier interne (9) sur le premier axe de rouleau (7) du troisième rouleau (4) est générée une contrainte de traction ou inversement.

2. Disposition de rouleaux (1) selon la revendication 1, dans lequel, au moins sur un deuxième axe de rouleau (8) du premier rouleau (2) et sur un deuxième axe de rouleau (8) adjacent du deuxième rouleau (3) et sur un troisième axe de rouleau (8) adjacent du troisième rouleau (4) sont disposées respectivement au moins deux paliers (9, 10),
dans lequel, en miroir par rapport au premier côté d'axe de rouleau (7) opposé, entre un palier interne (9) sur le deuxième axe de rouleau (8) du premier rouleau (2) et un palier externe (10) sur le deuxième axe de rouleau (8) du deuxième rouleau (3), est générée une contrainte de pression et, entre un palier externe (10) sur le deuxième axe de rouleau (8) du premier rouleau (2) et un palier interne (9) sur le deuxième axe de rouleau (8) du deuxième rouleau (3), est générée une contrainte de traction ou inversement,
et dans lequel, en miroir par rapport au premier côté d'axe de rouleau (7) opposé, entre un palier interne (9) sur le deuxième axe de rouleau (8) du deuxième rouleau (3) et un palier externe (10) sur le deuxième axe de rouleau (8) du troisième rouleau (4), est générée une contrainte de pression et, entre un palier externe (10) sur le deuxième axe de rouleau (8) du deuxième rouleau (3) et un palier interne (9) sur le deuxième axe de rouleau (8) du troisième rouleau (4), est générée une contrainte de traction ou inversement.

3. Disposition de rouleaux (1) selon l'une des revendications précédentes, dans lequel, au moins sur le premier axe de rouleau (7) du premier rouleau (2), sur le premier axe de rouleau (8) adjacent du deuxième rouleau (3) et sur le premier axe de rouleau (7) adjacent du troisième rouleau (4) sont disposés respectivement au moins trois paliers (9, 10, 11), de manière juxtaposée axialement,
dans lequel, entre, d'une part un palier interne (9) et un palier externe (10), sur le premier axe de rouleau (7) du premier rouleau (2) et, d'autre part, une unité de palier centrale (11) sur le premier axe de rouleau (7) du deuxième rouleau (3), est générée une contrainte de pression et, entre, d'une part, une unité de palier centrale (11) sur le premier axe de rouleau (7) du premier rouleau (2) et, d'autre part, un palier interne (9) et un palier externe (10) sur le premier axe de rouleau (7) du deuxième rouleau (3), est générée une contrainte de traction ou inversement,
dans lequel, entre, d'une part, un palier interne (9) et un palier externe (10) sur le premier axe de rouleau (7) du deuxième rouleau (3) et, d'autre part, une unité de palier centrale (11) sur le premier axe de palier (7) du troisième rouleau (4), est générée une contrainte en pression et, entre, d'une part, une unité de palier centrale (11) sur le premier axe de rouleau (7) du deuxième rouleau (3) et, d'autre part, un palier interne (9) et un palier externe (10) sur le premier axe de rouleau (7) du troisième rouleau (4), est générée une contrainte de traction ou inversement.

4. Disposition de rouleaux (1) selon la revendication 3, dans lequel, au moins sur le deuxième axe de rouleau (8) du premier rouleau (2), sur le deuxième axe de rouleau (8) adjacent du deuxième rouleau (3) et sur le deuxième axe de rouleau (8) adjacent du troisième rouleau (4), sont disposés respectivement au moins trois paliers (9, 10, 11), dans lequel, en miroir par rapport au premier côté d'axe de rouleau (7) opposé, entre, d'une part, un palier interne (9) et un palier externe (10) sur le deuxième axe de rouleau (8) du premier rouleau (2) et, d'autre part, une unité de palier centrale (11) sur le deuxième axe de rouleau (8) du deuxième rouleau (3), est générée une contrainte de pression et, entre, d'une part, une unité de palier centrale (11) sur le deuxième axe de rouleau (8) du premier rouleau (2) et, d'autre part, un palier interne (9) et un palier externe (10) sur le deuxième axe de rouleau (8) du deuxième rouleau (3), est générée une contrainte de traction ou inversement,
et dans lequel, en miroir par rapport au premier côté d'axe de rouleau (7) opposé, entre, d'une part un palier interne (9) et un palier externe (10) sur le deuxième axe de rouleau (8) du deuxième rouleau (3) et, d'autre part, une unité de palier centrale (11) sur le deuxième axe de rouleau (8) du troisième rouleau (4), est générée une contrainte de pression et, entre, d'une part, une unité de palier centrale (11) sur le deuxième axe de rouleau (8) du deuxième rouleau (3) et, d'autre part, un palier interne (9) et un palier externe (10) sur le deuxième axe de rouleau (8) du troisième rouleau (4), est générée une contrainte de traction ou inversement.

5. Disposition de rouleaux (1) selon l'une des revendications précédentes, dans laquelle un matériau à laminer est guidé dans celle-ci d'interstice de rouleau (5) en interstice de rouleau (5) de manière alternée dans des directions respectivement opposées.

6. Disposition de rouleaux (1) selon l'une des revendications précédentes, dans laquelle, pour la production des contraintes de traction et/ou de pression entre les axes de rouleaux (7, 8), est disposée respectivement une unité de régulation de palier de rouleau (12) par l'intermédiaire de laquelle les alimentations des interstices de rouleaux respectives sont réalisées.

7. Disposition de rouleaux (1) selon la revendication 6, dans laquelle l'unité de régulation de palier de rouleau (12) comprend un actionneur (13) régulé en pression.

8. Disposition de rouleaux (1) selon la revendication 6 ou 7, dans laquelle l'actionneur comprend un organe de réglage hydraulique, mécanique ou électrique.

9. Disposition de rouleaux (1) selon l'une des revendications 6 à 8, dans laquelle l'unité de régulation de palier de rouleau (12) est en liaison fonctionnelle respectivement avec les bagues externes de paliers (14) des paliers (9, 10, 11).

10. Disposition de rouleaux (1) selon l'une des revendications 3 à 9, dans laquelle l'unité de palier centrale (11) comprend un ou plusieurs paliers.

11. Disposition de rouleaux (1) selon l'une des revendications précédentes, dans laquelle le palier (9, 10, 11) comprend un palier à rouleaux et/ou un palier lisse.
